# EUROPEAN PATENT SPECIFICATION

(11) **EP 3 274 316 B1**
(45) Date of publication and mention of the grant of the patent: **02.01.2019**
(21) Application number: 16722425.2
(22) Date of filing: 25.03.2016
(51) Int. Cl.: C04B 28/00

(54) **AN INORGANIC INSULATION MATERIAL BASED ON POROUS GEOPOLYMER**
ANORGANISCHES ISOLATIONSMATERIAL BASIEREND AUF PORÖSEM GEOPOLYMER
MATÉRIAU D'ISOLATION INORGANIQUE À BASE DE GÉOPOLYMÈRE POREUX

(30) Priority: 25.03.2015 TR 201503582
(43) Date of publication of application: 31.01.2018
(73) Proprietor: Kaleseramik Canakkale Kalebodur Seramik Sanayi Anonim Sirketi, Canakkale (TR)
(72) Inventor: YILDIRIM, Yildiz, Canakkale (TR); YIGIT PALA, Cigdem, Canakkale (TR); KARA, Ferhat, Eylül Kampüsü 26550 Eskisehir (TR); KAYACI, Kagan, 17430 Can Canakkale (TR)
(74) Representative: Sezgin, Hatice Özlem
(86) International application number: PCT/TR2016/050079
(87) International publication number: WO 2016/153454

(56) References cited:
- WO-A1-2014/166998
- HAU-SHING SHIU ET AL: "Effects of Foam Agent on Characteristics of Thin-Film Transistor Liquid Crystal Display Waste Glass-Metakaolin-based Cellular Geopolymer", ENVIRONMENTAL PROGRESS & SUSTAINABLE ENERGY, vol. 33, no. 2, 15 June 2013 (2013-06-15), pages 538-550, XP002759027,

## Description

### Field of the Invention

The present invention relates to an inorganic insulation material, which has a low thermal conductivity coefficient and is designated as class A1 fire rated, and production of this material via geopolymerization method.

### Background of the Invention

Typically polystyrene based materials are used in the commercially produced thermal insulation materials. Processing of polystyrene insulation materials is easy. However, the facts that it has low fire resistance and that the material used is imported are its disadvantages. Rock wool and fiberglass are also used as thermal insulation materials. However, the facts that these materials are deformed upon impacts and that their thermal conductivity coefficient increases by time since their steam diffusion resistance is low cause disadvantages. These materials belong to A1 - A2 group non-combustion class and can resist up to 700°C.

Since the insulation materials obtained by geopolymerization are inorganic, they are designated as class A1 fire rated and since they have a hard structure they are more resistant than fiberglass and rock wool.

Geopolymerization is a material production technique which is basically applied by dissolution by the help of amorphous alumina-silicates such as metakaolin and alkaline hydroxides, and by condensation below 100°C. Recently, studies on production of porous insulation materials by this method have increased.

Stability of the foam produced in the insulation materials produced by geopolymerization is important. Liquid foams are thermodynamically unstable since they have a high gas-liquid interfacial area. There are several parameters that cause unstability:
- Drainage (channeling),
- Coalescence,
- Ostwald ripening chemical reaction.

Channels are the physical separation between the gas and liquid phases of the foam under the influence of gravity. While lightweight gas bubbles form a layer on the upper part, the heavier liquid phase gets denser at the lower part. The foams are characterized by a three dimensional structure. Intercellular surfaces are comprised of a thin film. Intersection point of three neighboring thin films is called the "Plateau borders".

Cases where coalescence and drainage are not sufficiently stable may also occur. Stability of the thin film is determined by the repulsive and attractive forces between the bubbles. Van der Waals attractive forces tend to push the bubbles against each other (negative disjoining pressure) and thus provide the main driving force for collapse of the thin film. Coalescence can be prevented by having the electrostatic and/or steric repulsive forces stronger than the Van der Waals attractive forces. This can be possible by having the surfactant molecules or particles attached to the air-water surface area. It may be possible to prevent drainage and coalescence processes; however Ostwald ripening can sometimes be prevented for a long term¹.

SHI, Hau-Shing et al. in "Effects of Foam Agent on Characteristics of Thin-Film Transistor Liquid Crystal Display Waste Glass-Metakaolin-based Cellular Geopolymer" are disclosing thin-film transistor liquid crystal display (TFT-LCD) waste glass comprises mainly SiO2 and Al2O3, which are suitable raw materials for geopolymer. This study investigates the effects of the amount of foam agents on the properties of waste glass-based cellular geopolymer. In this investigation, samples underwent a series of tests to determine their quality, including mechanical characterization, compressive strength, flexural strength, fire resistance, thermal conductivity, Fourier transform infrared spectroscopy, and scanning electron microscopy. The experimental results show that the mechanical strength and thermal conductivity decreased with the addition of foam agents, indicating that foam agents can reduce the thermal transfer. The pore volume increased with the amount of increase in foam agent.These results indicated that the amount of foam agent has a more substantial effect than waste glass replacement in geopolymers. WO2014/166998A1 discloses foamed geopolymer used as fire-resistant sealant material use in blocking opening of wall and floor in structure e.g. building and house during housing services. The foamed geopolymer is prepared from a mixture including 20 to 30 percent metakaolin, 20 to 30 percent muscovite mica, 35 to 50 percent aqueous alkali metal silicate solution, 1 to 10 percent alkali metal hydroxide, and 0.1 to 5 percent blowing agent. The solution is comprised of 15 to 45 percent alkali metal silicate.

In the study conducted by W.D.A. Rickard et al., a process is developed for producing fire-resistant insulation materials by geopolymerization technique. However, using alumina salt as the foaming agent in the said study has increased thermal conductivity coefficient. Furthermore, homogeneity could not be obtained in pore distribution of the samples. Therefore, macro pore percentage of the
¹A. R. Studart, U. T. Gonzenbach, E. Tervoort ve Ludwig J. Gauckler. Processing Routes to Macroporous Ceramics: A Review. J. Am. Ceram. Soc., 89 [6] 1771-1789 (2006).
samples remained under 50% and the densities were high. In connection to all of these results, thermal conductivity of the insulation material was found to be above 0.065 W/mK².

In another study, LUO YU-ping et al. have synthesized a thermal insulation material by using sorel cement and hydrogen peroxide, without applying steam curing and firing. Properties such as apparent density, bending strength, compressive strength, thermal conductivity, water resistance and thermal tolerance were characterized and their influences on the performance were discussed. It was determined that the said material had an apparent density of 360 kg/m³, a compressive strength of 1,86 MPa, a thermal conductivity coefficient of 0.072 W/mK, and a thermal tolerance temperature of 300°C. As a result, thermal conductivity coefficient remained above the value of 0.065 W/mK³.

By means of the non-combustible inorganic insulation material of the present invention having low thermal conductivity coefficient, the problems in the known art are solved. Production of this material by geopolymerization technique with an environment friendly method can be enabled.

### Summary of the Invention

The objective of the present invention is to provide an inorganic insulation material designated as class A1-fire rated and having a thermal conductivity coefficient below 0.065 W/K.

Another objective of the present invention is to provide the inorganic insulation material by using geopolymerization method.
²W. D.A. Rickard, L. Vickers, A. V. Riesse, Performance of fibre reinforced, low density metakaolin geopolymers under simulated fire conditions. Applied Clay Science 73 (2013) 71-77.
³LUO Yu-ping, WANG Li-jiu, Research on non-steam-cured and non-fired fly-ash thermal insulating materials. J China Univ Mining & Technol 18 (2008) 0116-0121.

### Detailed Description of the Invention

The inorganic insulation material, which is developed to fulfill the objective of the present invention and used for providing thermal insulation, is produced with a geopolymeric viscous paste comprising 40-55% by weight of metakaolin, 45-60% by weight of water glass, 5-6% by weight of sodium hydroxide and 2-3% by weight of hydrogen peroxide and 0.5-1% by weight of propyl gallate to ensure pore stability.

The composition of the inorganic insulation material of the present invention comprises 3-4% by weight of SiO₂/Al₂O₃ and 0.25-0.35% by weight of Na₂O/SiO₂.

Thermal conductivity coefficient of the inorganic insulation material of the present invention is smaller than 0.065 W/mK and therefore it is non-combustible and designated as class A1-fire rated.

Density of the inorganic insulation material of the present invention is within the range of 0.190-0.250 g/cm³.

Geopolymerization method is used for producing the inorganic insulation material of the present invention.

Geopolymerization method developed to fulfill the objective of the present invention is illustrated in the accompanying figure, in which;

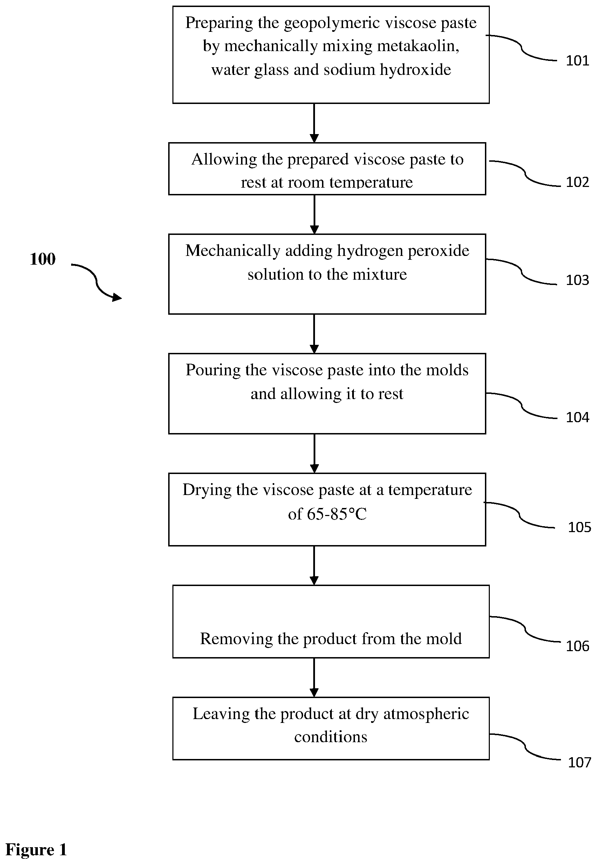

**Figure 1** shows the steps of the geopolymerization method.

The method steps given in Figure 1 are assigned reference numbers as follows:
**100.** Geopolymerization method
**101.** Preparing the geopolymeric viscose paste comprising 40-55% by weight of metakaolin, 45-60% by weight of water glass, 5-6% by weight of sodium hydroxide and 0.5-1% by weight of propyl gallate by mechanically mixing
**102.** Allowing the prepared viscose paste to rest at room temperature
**103.** Mechanically adding 2-3% by weight of hydrogen peroxide solution to the mixture
**104.** Pouring the viscose paste into the molds and allowing it to rest
**105.** Drying the viscose paste at a temperature of 65-85°C
**106.** Removing the product from the mold
**107.** Leaving the product at dry atmospheric conditions

The geopolymerization method (100) developed to fulfill the objective of the present invention comprises the steps of
- preparing the geopolymeric viscose paste comprising 40-55% by weight of metakaolin, 45-60% by weight of water glass, 5-6% by weight of sodium hydroxide and 0.5-1% by weight of propyl gallate by mechanically mixing (101),
- allowing the prepared viscose paste to rest at room temperature (102),
- mechanically adding 2-3% by weight of hydrogen peroxide solution to the mixture (103),
- pouring the viscose paste into the molds and allowing it to rest (104),
- drying the viscose paste at a temperature of 65-85°C (105),
- removing the product from the mold (106),
- leaving the product at dry atmospheric conditions (107).

## Claims

1. Geopolymeric viscose paste for producing inorganic insulation material **characterized in that** it comprises 40-55% by weight of metakaolin, 45-60% by weight of water glass, 5-6% by weight of sodium hydroxide, 2-3% by weight of hydrogen peroxide and 0.5-1% by weight of propyl gallate to ensure pore stability.

2. Geopolymeric viscose paste according to Claim 1 **characterized in that** its composition comprises 3-4% by weight of SiO₂/Al₂O₃ and 0.25-0.35% by weight of Na₂O/SiO₂.

3. Geopolymeric viscose paste according to Claim 1 **characterized in that** its density is in the range of 0.190-0.250 g/cm³.

4. A geopolymerization method (100), which is used for producing the inorganic insulation material **characterized by** the steps of
- preparing the geopolymeric viscose paste comprising 40-55% by weight of metakaolin, 45-60% by weight of water glass, 5-6% by weight of sodium hydroxide and 0.5-1% by weight of propyl gallate.by mechanically mixing (101),
- allowing the prepared viscose paste to rest at room temperature (102),
- mechanically adding 2-3% by weight of hydrogen peroxide solution to the mixture (103),
- pouring the viscose paste into the molds and allowing it to rest (104),
- drying the viscose paste at a temperature of 65-85°C (105),
- removing the product from the mold (106),
- leaving the product at dry atmospheric conditions (107).

5. An inorganic insulation material which is obtainable by the geopolymerization method (100) according to claim 4.

## Patentansprüche

1. Geopolymere Viskosepaste zur Herstellung von anorganischem Isoliermaterial **dadurch gekennzeichnet, dass** sie umfasst 40 bis 55 Gew. % von Metakaolin,
45 bis 60 Gew.% von Wasserglas, 5 bis 6 Gew .% von Natriumhydroxid, 2 bis 3 Gew.% von Wasserstoffperoxid und 0.5 bis 1 Gew. % Propylgallat, um die Porenstabilität zu gewährleisten.

2. Geopolymere Viskosepaste gemäß Anspruch 1, **dadurch gekennzeichnet, dass** ihre Zusammensetzung 3 bis 4 Gew. % von SiO₂/AbO₃ und 0.25 bis 0.35 Gew. % von Na₂O/SiO₂ umfasst.

3. Geopolymere Viskosepaste gemäß Anspruch 1, **dadurch gekennzeichnet, dass** ihre Dichte im Bereich von 0.190 bis 0.250 g/cm³ liegt.

4. Verfahren zur Geopolymerisation (100), welches zur Herstellung von anorganischem Isoliermaterial verwendet wird, **gekennzeichnet durch, dass** die folgenden Schritte
- Zubereitung der Geopolymere Viskosepaste umfassend 40 bis 55 Gew. % Metakaolin, 45 bis 60 Gew. % Wasserglas, 5 bis 6 Gew. % Natriumhydroxid und 0.5 bis 1 Gew. % Propylgallat durch mechanisches Mischen (101),
- Ermöglichen der zubereiteten Viskosepaste bei Raumtemperatur (102) für Ruhephase
- mechanische Hinzunahme von 2 bis 3 Gew. % Wasserstoffperoxidlösung zum Mischen (103),
- Gießen der Viskosepaste in die Formen und Ermöglichen sie für Ruhephase (104),
- Trocknen der Viskosepaste bei einer Temperatur von 65 bis 85°C (105),
- Entnahme des Produkts aus der Form (106)
- Verlassen des Produkts bei trockenen atmosphärischen Bedingungen (107).

5. Ein anorganisches Isoliermaterial, welches durch die Verfahren von Geopolymerisation (100) erhältlich ist, gemäß Anspruch 4.

## Revendications

1. Pâte de viscose géopolymérique pour la production d'un matériau isolant inorganique, **caractérisée en ce qu'**elle comprend 40-55% en poids de métakaolin,
45-60% en poids de verre soluble, 5-6% en poids d'hydroxyde de sodium, 2-3% en poids d'hydrogène peroxyde et 0.5-1% en poids de gallate de propyle pour assurer la stabilité des pores.

2. Pâte de viscose géopolymérique selon la revendication 1, **caractérisée en ce que** sa composition comprend 3-4% en poids de SiO₂/Al₂O₃ et 0.25-0.35% en poids de Na₂O/SiO₂.

3. Pâte de viscose géopolymérique selon la revendication 1, **caractérisée en ce que** sa densité se situe entre 0.190-0.250 g/cm³.

4. Procédé de géopolymérisation (100), qui esst utilisé pour produire le matériau isolant inorganique **caractérisé par** les étapes consistant à:
- préparer la pâte de viscose géopolymérique comprenant 40-55% en poids de métakaolin, 45-60% en poids de verre soluble, 5-6% en poids d'hydroxyde de sodium et 0.5-1% en poids de gallate de propyle par mélange mécanique (101),
- permettre reposer la pâte de viscose préparée à température ambiante (102),
- ajouter mécaniquement 2-3% en poids de solution de peroxyde d'hydrogène au mélange (103),
- verser la pâte de viscose dans les moules et permettre la reposer (104),
- sécher la pâte de viscose à une température de 65-85°C (105),
- retirer le produit du moule (106),
- laisser le produit dans des conditions atmosphériques sèches (107).

5. Matériau isolant inorganique qui est peut être obtenu par le procédé de géopolymérisation (100) selon la revendication 4.
